# EUROPÄISCHE PATENTSCHRIFT

(11) **EP 1 753 919 B1**
(45) Veröffentlichungstag und Bekanntmachung des Hinweises auf die Patenterteilung: **14.01.2009**
(21) Anmeldenummer: 05748023.8
(22) Anmeldetag: 21.05.2005
(51) Int. Cl.: E02D 17/20, E02B 3/12

(54) **EROSIONSSCHUTZMATTE MIT FASERMATRIX AUF CELLULOSEBASIS UND VERFAHREN ZUR HERSTELLUNG VON EROSIONSSCHUTZMATTEN MIT FASERMATRIX AUF CELLULOSEBASIS**
EROSION PROTECTION MAT COMPRISING A CELLULOSE-BASED FIBRE MATRIX AND METHOD FOR PRODUCING EROSION PROTECTION MATS OF THIS TYPE
TAPIS DE PROTECTION CONTRE L'EROSION A MATRICE FIBREUSE CELLULOSIQUE ET PROCEDE POUR FABRIQUER DES TAPIS DE PROTECTION CONTRE L'EROSION A MATRICE FIBREUSE CELLULOSIQUE

(30) Priorität: 28.05.2004 EP 04012742
(43) Veröffentlichungstag der Anmeldung: 21.02.2007
(73) Patentinhaber: Colbond B.V., 6827 AV Arnhem (NL)
(72) Erfinder: BÖTTCHER, Rolf-Dieter, 47533 Kleve (DE); SCHELBERGEN, Paulus, Christiaan, Anthonius, Maria, NL-XC 6662 Elst (NL)
(74) Vertreter: Oberlein, Gerriet H. R.
(86) Internationale Anmeldenummer: PCT/EP2005/005537
(87) Internationale Veröffentlichungsnummer: WO 2005/116345

(56) Entgegenhaltungen:
- DE-U- 29 613 407
- GB-A- 1 403 944
- US-A- 4 329 392
- US-B1- 6 360 478
- PATENT ABSTRACTS OF JAPAN Bd. 2000, Nr. 07, 29. September 2000 (2000-09-29) & JP 2000 106751 A (KAKUI KK), 18. April 2000 (2000-04-18)

## Beschreibung

Die Erfindung betrifft ein dreidimensionales Gebilde bestehend aus einer dreidimensionalen Matte aus synthetischen Filamenten und einer Matrix aus überwiegend natürlichen Fasern, die auf und innerhalb ders dreidimensionalen Matte verteilt vorliegt. Die Erfindung betrifft auch ein Verfahren zur Herstellung eines dreidimensionalen Gebildes bestehend aus einer dreidimensionalen Matte aus synthetischen Filamenten und einer Matrix aus natürlichen Fasern, die auf und innerhalb der dreidimensionalen Matte verteilt vorliegt

Unter "Filament" soll im Rahmen dieser Erfindung die im übrigen gebräuchliche Bezeichnung für "praktisch endloses fadenförmiges Gebilde aus endlichen Fasern oder aus ein oder mehreren praktisch endlosen Elementarfäden" verstanden werden. Bevorzugt wird im Rahmen der Erfindung ein Monofilament, d.h. ein fadenförmiges Gebilde aus einem Elementarfaden, für die Matte aus synthetischen Filamenten verwendet.

Solche dreidimensionalen Gebilde aus synthetischen Filamenten und natürlichen Fasern werden häufig als Erosionsschutzmatten oder Bepflanzungshilfen eingesetzt. Die nach veröffentlichte europäischen Anmeldung EP 1467029 A2 mit der Anmeldenummer 04006317.4 offenbart eine Erosionskontrollmatte bzw. eine Rasenverstärkungsmatte bestehend aus einer Fasermatrix und einer Matte zur Unterstützung dieser Fasermatrix, die aus Filamenten besteht, die an ihren Kreuzungsstellen verbunden bzw. verschmolzen sind. Die Fasermatrix kann aus natürlichen oder synthetischen Fasern gebildet werden und ist mit der Matte verklebt. Die hier offenbarte Matte stellt ein geeignetes Mittel zur Erosionskontrolle oder als Bepflanzungshilfe dar.

JP 2000106751-A offenbart eine "mattenartige" Struktur, die Samen und Düngemittel enthält und als Baumpflanzhilfe, zur Dächerbegrünung oder zur Böschungsbefestigung eingesetzt werden kann. Diese Struktur besteht aus einem Netz aus synthetischen Fasern, auf das ein Kleber aufgetragen wird. Auf dieses Netz aus synthetischen Fasern folgt eine mattenartige Lage kardierter Baumwollfasern, die durch den aufgetragenen Kleber mit dem Netz aus synthetischen Fasern verbunden wird. Auf diese Schicht werden Samen und Düngemittel aufgesprüht. Über diese Schicht aus Samen und Düngemittel wird dann eine Lage aus Baumwollfasern oder Pulpe gesprüht. Zur Verbesserung der Keimfähigkeit können noch verschwelte Baumwollfasern zugegeben werden. Nachteil dieser Konstruktion ist der hohe technische Aufwand, dadurch, dass die Matte durch kardierte Baumwolle gebildet wird, die aufgeklebt werden muss.

Aufgrund der Tatsache, dass lediglich ein Netz und keine Matte aus synthetischen Filamenten verwendet wird, ist die Rückstellfähigkeit der in JP 2000106751-A offenbarten Struktur nach mechanischer Belastung jedoch gering.

GB 1 403 944 offenbart ein Gebilde umfassend zwei Lagen wobei die erste Lage aus natürlichen Fasern synthetischen Fasern oder Mischungen daraus besteht, die untereinander verbunden und umschlungen sind und wobei die zweite Lage eine Matte aus synthetischen Fasern ist. Die Verbindung von erste und zweite Lage erfolgt durch Kleben Nähen oder Nadeln.

Aufgabe der vorliegenden Erfindung ist es die beschriebenen Nachteile des Standes der Technik zu beseitigen und damit eine zugleich wirksame und kostengünstige Alternative zum Stand der Technik anbieten zu können.

Gelöst wird diese Aufgabe durch ein dreidimensionales Gebilde bestehend aus einer dreidimensionalen Matte aus synthetischen Filamenten und einer Matrix aus natürlichen Fasern, die auf und innerhalb der dreidimensionalen Matte verteilt vorliegt, dadurch gekennzeichnet, dass der Zusammenhalt zwischen den ungeordneten Fasern der Matrix untereinander sowie der Zusammenhalt zwischen den ungeordneten Fasern der Matrix und den Fasern aus synthetischen Filamenten der Matte durch Vermischen der Fasern gegeben ist.

Ohne an die Theorie gebunden zu sein, wird angenommen, dass, aufgrund der polaren Struktur sowohl der Fasermatrix als auch der Matte aus synthetischen Filamenten, bei der Verbindung von Fasermatrix und Matte nicht nur das Vermischen von Fasermatrix mit den synthetischen Filamenten der Matte, sondern auch Wechselwirkungen wie Wasserstoffbrückenbindungen und van der Waals Kräfte eine Rolle spielen.

Die Fasermatrix folgt in ihrer Form der Oberflächenkontur der dreidimensionalen Form der Matte aus synthetischen Filamenten, indem sie den überwiegenden Teil der Oberflächen zwischen den synthetischen Fasern, die die Kontur bilden bedeckt. Dabei enthält die Fasermatrix noch Öffnungen. Diese Öffnungen sind zufällig über die Oberfläche des dreidimensionalen Gebildes bestehend aus einer Matte aus synthetischen Filamenten und einer Matrix aus natürlichen Fasern verteilt und haben eine Größe von 1 mm² bis 150 mm² bevorzugt 10 mm² bis 100 mm² . Der Anteil der Öffnungen an der gesamten Oberfläche beträgt etwa 5% bis 50 % bevorzugterweise 10% bis 30%.

Die vorliegende Erfindung weist besonders im Hinblick auf die unveröffentlichte europäische Anmeldung mit der Anmeldenummer 04006317.4 eine optimierte Funktion der Erosionsschutzmatte hinsichtlich des Wasserablaufes auf und ist zudem mit relativ geringem technischen Aufwand zu realisieren. Die Fasermatrix zeichnet sich, aufgrund der für diesen Einsatzzweck relativ geringen Faserdicke von 0,5µm - 50µm, durch eine große spezifische Oberfläche aus.

Der Einsatz eines solchen dreidimensionalen Gebildes als Erosionsschutzmatte mit einer sich der Kontur der Matte aus synthetischen Fasern anpassenden Fasermatrix aus natürlichen Fasern bewirkt einen unmittelbaren Erosionsschutz, auch wenn sich noch keine schützende Vegetation gebildet hat, da die Fasermatrix verhindert, dass Bodenpartikel weggeschwemmt werden. Eine offene Struktur, bei ausschließlicher Verwendung einer Matte aus synthetischen Fasern, würde im Falle starker Regenfälle nicht verhindern können, dass Boden weggeschwemmt wird und böte deshalb nur eine geringe Schutzwirkung. Zudem würde der Boden in einer offenen Struktur schneller austrocknen. Die Fasermatrix, so ausgebildet, dass sie der Kontur der Matte folgt, ist zum einen in der Lage, Regenwasser zu speichern, d.h. zurückzuhalten und so ein vegetationsförderndes Mikroklima zu schaffen, und zum anderen sorgen die Öffnungen in der Fasermatrix für eine gute Befeuchtung des unter dem dreidimensionalen Gebilde liegenden Bodens, wobei ein Wegschwemmen größtenteils verhindert wird.

Eine geschlossene Fasermatrix als Lage auf der Matte aus synthetischen Filamenten oder eine Fasermatrix, die die Form der Matte aus synthetischen Fasern ausfüllt und die zumindest aus fluiddynamischer Sicht eine im wesentlichen ebene Oberfläche aufweist, führt dazu, dass mehr Regenwasser über die Oberfläche der Matrix abfließt als beim Gegenstand der vorliegenden Erfindung.

Durch die vorliegende Erfindung wird eine bessere Befeuchtung des unter der Matrix liegenden Bodens erreicht, da die Matrix keine ebene Fläche bildet, sondern den Konturen der Matte aus synthetischen Filamenten folgt und Öffnungen aufweist.
Durch die erfindungsgemäße Fasermatrix ist gewährleistet, dass zum einen mehr Feuchtigkeit den unter der Erosionsschutzmatte gelegenen Boden erreicht und dass Regenwasser zum anderen nicht direkt auf den Boden trifft und die obere Bodenschicht weggeschwemmt wird.

Ein Langzeiterosionsschutz wird durch die Matte aus synthetischen Filamenten erzielt, da diese nicht verrottet. Zudem hat die Matte aus synthetischen Filamenten noch den Vorteil, dass sie, aufgrund ihrer elastischen Struktur und dadurch bedingten Rückstellfähigkeit, nach mechanischer Belastung im wesentlichen in ihre Ausgangsform zurückfindet und so für eine zusätzliche Armierung im Wurzelbereich der Vegetation sorgt. Die Matte aus synthetischen Filamenten kann aus Polyester, wie z.B. Polyethylenterephtalat, aus Polyolefinen, wie z.B. Polypropylen oder Polyethylen hergestellt werden, bevorzugt sind aufgrund ihrer Rückstellfähigkeit allerdings Polyamide, besonders bevorzugt wird die Matte aus synthetischen Filamenten aus Polyamid 6 hergestellt.

Die Fasermatrix aus natürlichen Fasern besteht im wesentlichen aus pflanzlicher Cellulose. Hier können Baumwollfasern oder bevorzugt Pulpe aus der Papierverarbeitung Verwendung finden. Für den Zusammenhalt der Fasermatrix sind Faserdicken im Bereich von 0,5 µm - 50 µm und die dadurch bedingte große spezifische Oberfläche von großer Bedeutung. Natürlich ist es auch möglich, nicht nur neue Materialien zu verwenden, sondern auch Recyclingmaterial. Hier sind aus dem Windelrecycling gewonnene Cellulosefasern zu nennen.

In einer besonderen Ausführungsform enthält die Fasermatrix neben Cellulose auch Holzfasern, Holzspäne oder zu Schnitzeln gehacktes Holz, die bevorzugt eine Länge von 1 bis 6 mm aufweisen. Dadurch wird ein noch besseres Festhalten von an ungeschützten Stellen weggeschwemmten Bodenpartikeln und eine Befeuchtung des unter der Matte liegenden Bodens erreicht. Gleichzeitig wird vermieden, dass durch zu hohe Abflussgeschwindigkeiten der Boden unter der Matte weggeschwemmt wird.

Die Matte aus synthetischen Filamenten kann die Struktur eines Vlieses aufweisen, wobei sowohl Trockenvliese als auch Nassvliese möglich sind. Unter Vlies sind sowohl zweidimensionale als auch dreidimensionale Formen zu verstehen. In einer bevorzugten Ausführungsform entspricht die Matte aus synthetischen Filamenten einer der bekannten dreidimensionalen Enkamat^{®} Strukturen, die aus einer Vielzahl von synthetischen Polymeren schmelzgesponnenen, sich stellenweise gegenseitig überkreuzenden and an den Kreuzungsstellen miteinander verschweißten Fäden bestehen.

Das dreidimensionale Gebilde bestehend aus einer Matte aus synthetischen Filamenten und einer Matrix aus natürlichen Fasern weist eine Stärke von 2 mm bis 40 mm auf, bevorzugt eine Stärke von 10 mm bis 20 mm. Für den Einsatz als Erosionsschutzmatte liegt die Stärke bei 2 mm bis 40 mm, in einer bevorzugten Ausführungsform beträgt die Stärke der Erosionsschutzmatte 10 mm bis 20 mm.

Die Erfindung betrifft auch ein Verfahren zur Herstellung eines dreidimensionalen Gebildes bestehend aus einer dreidimensionalen Matte aus synthetischen Filamenten und einer Matrix aus natürlichen Fasern, die auf und innerhalb der dreidimensionalen Matte verteilt vorliegt, dadurch gekennzeichnet, dass die in Suspension vorliegenden natürlichen Fasern auf die Matte aus synthetischen Filamenten aufgetragen werden und dass die dann auf und innerhalb des dreidimensionalen Gebildes vorliegende Fasermatrix getrocknet wird. Für dieses Verfahren wird kein Kleber oder Binder benötigt, der die Fasermatrix zusammenhält oder die Fasermatrix mit der Matte aus synthetischen Filamenten verbindet. Das dreidimensionale Gebilde bestehend aus einer Matte aus synthetischen Filamenten und einer Matrix aus natürlichen Fasern hält dadurch zusammen, dass die Fasern der Fasermatrix aus natürlichen Fasern im wesentlichen ungeordnet vorliegen und ineinander greifen und dadurch sowohl die Fasermatrix aus natürlichen Fasern als auch die Fasermatrix aus natürlichen Fasern und die Matte aus synthetischen Filamenten zusammenhalten. Ohne an die Theorie gebunden zu sein, wird angenommen, dass, aufgrund der polaren Struktur sowohl der Fasermatrix als auch der Matte aus Filamenten, bei der Verbindung von Fasermatrix und Matte nicht nur das Vermischen von Fasermatrix mit den synthetischen Filamenten der Matte, sondern auch Wechselwirkungen wie Wasserstoffbrückenbindungen und van der Waals Kräfte eine Rolle spielen.

Die Konzentration an Fasern in der aufzutragenden Fasersuspension liegt bei 0,5% bis 5%, vorzugsweise bei 1% bis 2,5%. Die Fasermatrix aus natürlichen Fasern hat einen Gewichtsanteil an dem dreidimensionalen Gebilde bestehend aus einer Matte aus synthetischen Filamenten und einer Matrix aus natürlichen Fasern von 40% - 90%, vorzugsweise 50% - 70%.

Das Flächengewicht des dreidimensionalen Gebildes bestehend aus einer Matte aus synthetischen Filamenten und einer Matrix aus natürlichen Fasern beträgt 100 g/m² - 600 g/m², bevorzugt 200 g/m² - 400 g/m², besonders bevorzugt 300 g/m² - 400 g/m².

Die Suspension aus natürlichen Fasern ist üblicherweise eine wässrige Suspension, andere Suspensionsmittel außer Wasser und Suspensionsmittel, die nur teilweise Wasser enthalten, sind ebenfalls möglich. Die Auftragung der Suspension aus natürlichen Fasern auf die Matte aus synthetischen Filamenten erfolgt vorzugsweise durch Gießen, Sprühen oder Spritzen.

Darüber hinaus besteht die Möglichkeit, dass die Auftragung der Suspension aus natürlichen Fasern auf die Matte aus synthetischen Filamenten durch einen Schöpfprozeß erfolgt, d.h. durch Eintauchen der Matte aus synthetischen Filamenten in die Suspension aus natürlichen Fasern. Die Matte aus synthetischen Filamenten wird dazu in ein Bad oder eine Wanne mit Fasersuspension eingetaucht, nach dem Eintauchen kann die Matte einer leichten Longitudinal- und/oder Transversalbewegung unterzogen werden. Anschließend wird die Matte aus synthetischen Filamenten so aus dem Bad bzw. aus der Wanne wieder entnommen, dass ein feuchtes Fasergemisch auf der Matte aus synthetischen Filamenten verbleibt. Dafür kann z.B. auch eine in der Papierverarbeitung bekannte Rundsieb Papiermaschine verwendet werden.

Für die Auftragung der Fasermatrix können auch aus der Verfahrenstechnik bekannte Feststoffabscheider wie Bandfilter oder Trommeldrehfilter eingesetzt werden.

Eine weitere Möglichkeit der Auftragung der Suspension aus natürlichen Fasern in Form eines Schaumes.

Die Auftragung der Suspension aus natürlichen Fasern auf die Matte aus synthetischen Filamenten kann auch durch Beflockung erfolgen, d.h. durch elektrostatische Aufladung erfolgen. Dabei ist sowohl ein Trockenverfahren als auch ein Nassverfahren einsetzbar.

Die Verarbeitbarkeit der Fasersuspension besonders im Hinblick auf die Auftragung kann durch Zugabe von Verdickungsmitteln verbessert werden. Nach dem erfindungsgemäßen Verfahren ist es also auch möglich, durch den Einsatz von Verdickungsmittel, eine relativ viskose Lösung auf die Matte aus synthetischen Filamenten aufzubringen.

Eine weitere Möglichkeit ist die Auftragung der Fasersuspension vor Ort. Hier werden zunächst die Matten aus synthetischen Filamenten auf die zu bedeckenden Flächen ausgelegt und die Fasersuspension wird dann auf die Matten gegossen, gesprüht oder gespritzt. Da die Fasermatrix aus natürlichen Fasern nach der Auftragung eine hohe Feuchtigkeit aufweist, bietet sich anschließend eine Auftragung von Saatgut und Düngemittel an. Hier wird die nötige Feuchtigkeit bereitgestellt, um eine Keimung einzuleiten.

Auch ist die Auftragung von Saatgut und Düngemittel bei der Produktion des dreidimensionalen Gebildes bestehend aus einer Matte aus synthetischen Filamenten und einer Matrix aus natürlichen Fasern als Erosionsschutzmatte möglich. Nach Auftragung und Trocknung der Matrix aus natürlichen Fasern kann durch Zugabe von Saatgut und Düngemittel eine integrierte Erosionsschutzmatte bestehend aus einer Matte aus synthetischen Filamenten und einer Matrix aus natürlichen Fasern sowie Saatgut und Düngemittel hergestellt werden.

Für die Trocknung des dreidimensionalen Gebildes nach Auftragung der Suspension aus natürlichen Fasern auf die Matte aus synthetischen Filamenten stehen verschiedene Verfahren zur Verfügung. Eine Möglichkeit stellt die Trocknung durch Heißluft dar.

Vorzugsweise erfolgt die Trocknung des dreidimensionalen Gebildes nach Auftragung der Suspension aus natürlichen Fasern auf die Matte aus synthetischen Filamenten durch Mikrowellentrocknung.

Eine weitere Alternative zur Trocknung des dreidimensionalen Gebildes nach Auftragung der Suspension aus natürlichen Fasern auf die Matte aus synthetischen Filamenten stellt die Trocknung durch Infrarotstrahlung dar.

Natürlich kann die Trocknung des dreidimensionalen Gebildes nach Auftragung der Suspension aus natürlichen Fasern auf die Matte aus synthetischen Filamenten auch durch Einwirkung von Sonnenstrahlung erfolgen. Eine solche Trocknung ist dann sinnvoll, wenn die Fasermatrix aus natürlichen Fasern vor Ort, d.h. unmittelbar dort, wo die Matte aus synthetischen Filamenten Verwendung findet, aufgetragen wird.

## Patentansprüche

1. Dreidimensionales Gebilde bestehend aus einer dreidimensionalen Matte aus synthetischen Filamenten und einer Matrix aus überwiegend natürlichen Fasern, die auf und innerhalb der dreidimensionalen Matte verteilt vorliegt, **dadurch gekennzeichnet, dass** der Zusammenhalt zwischen den ungeordneten Fasern der Matrix untereinander sowie der Zusammenhalt zwischen den ungeordneten Fasern der Matrix und den Fasern aus synthetischen Filamenten der Matte durch Vermischen der Fasern gegeben ist und dass die Fasermatrix in ihrer Form der Oberflächenkontur der dreidimensionalen Form der Matte aus synthetischen Filamenten folgt, indem sie den überwiegenden Teil der Oberflächen zwischen den synthetischen Filamenten, die die Oberflächenkontur bilden, bedeckt und dass die Fasermatrix Öffnungen enthält.

2. Dreidimensionales Gebilde nach Anspruch 1, **dadurch gekennzeichnet, dass** die Fasermatrix im wesentlichen aus Cellulose besteht.

3. Dreidimensionales Gebilde nach Anspruch 1 oder 2, **dadurch gekennzeichnet, dass** die Fasermatrix aus Recyclingmaterial besteht.

4. Dreidimensionales Gebilde nach einem oder mehreren der Ansprüche 1 bis 3, **dadurch gekennzeichnet, dass** die Fasermatrix neben Cellulose auch Holzfasern, Holzspäne oder zu Schnitzeln gehacktes Holz enthält.

5. Dreidimensionales Gebilde nach einem oder mehreren der Ansprüche 1 bis 4, **dadurch gekennzeichnet, dass** die Matte aus synthetischen Filamenten in Form der Enkamat^{®} Struktur vorliegt.

6. Erosionsschutzmatte enthaltend ein dreidimensionales Gebilde nach einem der Ansprüche 1 bis 5.

7. Verfahren zur Herstellung eines dreidimensionalen Gebildes bestehend aus einer dreidimensionalen Matte aus synthetischen Filamenten und einer Matrix aus natürlichen Fasern, die auf und innerhalb der dreidimensionalen Matte verteilt vorliegt, **dadurch gekennzeichnet, dass** die in Suspension vorliegenden natürlichen Fasern auf die Matte aus synthetischen Filamenten aufgetragen werden und dass die dann auf und innerhalb des dreidimensionalen Gebildes vorliegende Fasermatrix getrocknet wird.

8. Verfahren nach Anspruch 7 **dadurch gekennzeichnet, dass** die Auftragung der Suspension aus natürlichen Fasern auf die Matte aus synthetischen Filamenten durch Gießen, Sprühen oder Spritzen erfolgt.

9. Verfahren nach Anspruch 7 **dadurch gekennzeichnet, dass** die Auftragung der Suspension aus natürlichen Fasern auf die Matte aus synthetischen Filamenten durch einen Schöpfprozess, d.h. durch Eintauchen der Matte aus synthetischen Filamenten in die Suspension aus natürlichen Fasern erfolgt.

10. Verfahren nach Anspruch 7 oder 8 **dadurch gekennzeichnet, dass** die Auftragung der Suspension aus natürlichen Fasern auf die Matte aus synthetischen Filamenten durch elektrostatische Aufladung erfolgt.

11. Verfahren nach Anspruch 7 bis 10 **dadurch gekennzeichnet, dass** die Trocknung des dreidimensionalen Gebildes nach Auftragung der Suspension aus natürlichen Fasern auf die Matte aus synthetischen Filamenten durch Mikrowellentrocknung erfolgt.

12. Verfahren nach Anspruch 7 bis 10 **dadurch gekennzeichnet, dass** die Trocknung des dreidimensionalen Gebildes nach Auftragung der Suspension aus natürlichen Fasern auf die Matte aus synthetischen Filamenten durch Heißluft erfolgt.

13. Verfahren nach Anspruch 7 bis 10 **dadurch gekennzeichnet, dass** die Trocknung des dreidimensionalen Gebildes nach Auftragung der Suspension aus natürlichen Fasern auf die Matte aus synthetischen Filamenten durch Infrarotstrahlung erfolgt.

14. Verfahren nach Anspruch 7 bis 10 **dadurch gekennzeichnet, dass** die Trocknung des dreidimensionalen Gebildes nach Auftragung der Suspension aus natürlichen Fasern auf die Matte aus synthetischen Filamenten durch Einwirkung von Sonnenstrahlung erfolgt.

## Claims

1. Three-dimensional structure consisting of a three-dimensional mat made of synthetic filaments and of a matrix made of predominantly natural fibers, which is distributed over and in the three-dimensional mat, **characterized in that** the coherence between the disordered fibers of the matrix among themselves as well as the coherence between the disordered fibers of the matrix and the synthetic filament fibers of the mat is achieved by mixing the fibers, and that the fiber matrix adapts its shape to the surface contour of the three-dimensional shape of the mat of synthetic filaments, as the fiber matrix covers the predominant part of the surfaces between the synthetic filaments that form the surface contour, and further that the fiber matrix has openings.

2. Three-dimensional structure according to Claim 1, **characterized in that** the fiber matrix essentially consists of cellulose.

3. Three-dimensional structure according to Claim 1 or 2, **characterized in that** the fiber matrix consists of recycling material.

4. Three-dimensional structure according to one or more of Claims 1 to 3, **characterized in that** the fiber matrix also contains wood fibers, wood chips or wood chopped into small pieces along with cellulose.

5. Three-dimensional structure according to one or more of Claims 1 to 4, **characterized in that** the mat made of synthetic filaments is in the shape of the Enkamat^{®} structure.

6. Erosion protection mat containing a three-dimensional structure according to one of Claims 1 to 5.

7. Method for producing a three-dimensional structure consisting of a three-dimensional mat made of synthetic filaments and a matrix made of natural fibers, which is distributed over and in the three-dimensional mat, **characterized in that** the natural fibers present in the form of a suspension are applied onto the mat of synthetic filaments and that the fiber matrix that is then present over and in the three-dimensional structure is dried.

8. Method according to Claim 7, **characterized in that** the application of the suspension of natural fibers onto the mat of synthetic filaments occurs via pouring, spraying or sprinkling.

9. Method according to Claim 7, **characterized in that** the application of the suspension of natural fibers onto the mat of synthetic filaments occurs via a scooping process, i.e. by dipping the mat of synthetic filaments into the suspension of natural fibers.

10. Method according to Claim 7 or 8, **characterized in that** the application of the suspension of natural fibers onto the mat of synthetic filaments occurs via electrostatic charge.

11. Method according to Claims 7 to 10, **characterized in that** the drying of the three-dimensional structure following the application of the suspension of natural fibers onto the mat of synthetic filaments occurs via microwave drying.

12. Method according to Claims 7 to 10, **characterized in that** the drying of the three-dimensional structure following the application of the suspension of natural fibers onto the mat of synthetic filaments occurs via hot air.

13. Method according to Claims 7 to 10, **characterized in that** the drying of the three-dimensional structure following the application of the suspension of natural fibers onto the mat of synthetic filaments occurs via infrared radiation.

14. Method according to Claims 7 to 10, **characterized in that** the drying of the three-dimensional structure following the application of the suspension of natural fibers onto the mat of synthetic filaments occurs via exposure to solar radiation.

## Revendications

1. Structure tridimensionnelle constituée d'une nappe tridimensionnelle en filaments synthétiques et d'une matrice de fibres principalement naturelles, qui est répartie sur la nappe tridimensionnelle et à l'intérieur de celle-ci, **caractérisée par le fait que** la cohésion des fibres désordonnées de la matrice entre elles et la cohésion entre les fibres désordonnées de la matrice et les fibres en filaments synthétiques de la nappe est obtenue par mélange des fibres, et **par le fait que** la matrice de fibres suit avec sa forme le contour de surface de la forme tridimensionnelle de la nappe de filaments synthétiques, en recouvrant la majeure partie des surfaces entre les filaments synthétiques constituant le contour de surface, et **par le fait que** la matrice de fibres comporte des ouvertures.

2. Structure tridimensionnelle selon la revendication 1, **caractérisée par le fait que** la matrice de fibres est essentiellement constituée de cellulose.

3. Structure tridimensionnelle selon la revendication 1 ou 2, **caractérisée par le fait que** la matrice de fibres est constituée de matériaux recyclés.

4. Structure tridimensionnelle selon une ou plusieurs des revendications 1 à 3, **caractérisée par le fait que** la matrice de fibres contient, outre la cellulose, également des fibres de bois, des copeaux de bois ou du bois découpé en morceaux.

5. Structure tridimensionnelle selon une ou plusieurs des revendications 1 à 4, **caractérisée par le fait que** la nappe de filaments synthétique est présente sous la forme de la structure Enkamat ®.

6. Nappe de protection contre l'érosion, contenant une structure tridimensionnelle selon une des revendications 1 à 5.

7. Procédé de fabrication d'une structure tridimensionnelle constituée d'une nappe tridimensionnelle en filaments synthétiques et d'une matrice de fibres naturelles, qui est répartie sur la nappe tridimensionnelle et à l'intérieur de celle-ci, **caractérisé par le fait que** les fibres naturelles, présentes en suspension, sont appliquées sur la nappe de filaments synthétiques, et **par le fait que** la matrice de fibres, qui est alors présente sur la structure tridimensionnelle et à l'intérieur de celle-ci, est séchée.

8. Procédé selon la revendication 7, **caractérisé par le fait que** l'application de la suspension de fibres naturelles sur la nappe de filaments synthétiques est réalisée par coulée, pulvérisation ou projection.

9. Procédé selon la revendication 7, **caractérisé par le fait que** l'application de la suspension de fibres naturelles sur la nappe de filaments synthétiques est réalisée à l'aide d'un processus de trempage, c'est-à-dire par immersion de la nappe de filaments synthétiques dans la suspension de fibres naturelles.

10. Procédé selon la revendication 7 ou 8, **caractérisé par le fait que** l'application de la suspension de fibres naturelles sur la nappe de filaments synthétiques est réalisée par charge électrostatique.

11. Procédé selon les revendications 7 à 10, **caractérisé par le fait que**, après application de la suspension de fibres naturelles sur la nappe de filaments synthétiques, le séchage de la structure tridimensionnelle est réalisé par micro-ondes.

12. Procédé selon les revendications 7 à 10, **caractérisé par le fait que**, après application de la suspension de fibres naturelles sur la nappe de filaments synthétiques, le séchage de la structure tridimensionnelle est réalisé avec de l'air chaud.

13. Procédé selon les revendications 7 à 10, **caractérisé par le fait que**, après application de la suspension de fibres naturelles sur la nappe de filaments synthétiques, le séchage de la structure tridimensionnelle est réalisé par rayonnement infrarouge.

14. Procédé selon les revendications 7 à 10, **caractérisé par le fait que**, après application de la suspension de fibres naturelles sur la nappe de filaments synthétiques, le séchage de la structure tridimensionnelle est réalisé par l'action du rayonnement solaire.
